# EUROPÄISCHE PATENTSCHRIFT

(11) **EP 2 190 327 B1**
(45) Veröffentlichungstag und Bekanntmachung des Hinweises auf die Patenterteilung: **18.04.2012**
(21) Anmeldenummer: 08772900.0
(22) Anmeldetag: 23.07.2008
(51) Int. Cl.: A47J 31/41

(54) **VORRICHTUNG ZUR HERSTELLUNG UND AUSGABE VON AUS MILCH MIT FLÜSSIGEN AROMASTOFFEN GEMISCHTEN GETRÄNKEN**
DEVICE FOR PRODUCING AND DISPENSING BEVERAGES MIXED FROM MILK WITH LIQUID FLAVORING AGENTS
DISPOSITIF DE PRODUCTION ET DE DISTRIBUTION DE BOISSONS COMPOSÉES DE MÉLANGES DE LAIT ET DE SUBSTANCES AROMATISANTES LIQUIDES

(30) Priorität: 06.08.2007 CH 12432007
(43) Veröffentlichungstag der Anmeldung: 02.06.2010
(73) Patentinhaber: Egro Suisse AG, 5605 Dottikon (CH)
(72) Erfinder: ANLIKER, Markus, CH-5722 Gränichen (CH); LANDOLT, Markus, CH-8006 Zürich (CH)
(74) Vertreter: Robba, Pierpaolo
(86) Internationale Anmeldenummer: PCT/CH2008/000329
(87) Internationale Veröffentlichungsnummer: WO 2009/018672

(56) Entgegenhaltungen:
- WO-A-2006/135864
- US-A- 6 099 878
- US-A1- 2004 009 281
- US-A1- 2005 095 341
- US-A1- 2005 223 911

## Beschreibung

Die vorliegende Erfindung betrifft eine Vorrichtung gemäss dem Oberbegriff des Anspruchs 1.

Einem Trend folgend, werden in der Gastronomie neben den bekannten reinen Kaffeegetränken und den Kaffee-Milch-Mischgetränken mit Aromen veredelte kalte und warme Milchgetränke sowie Kaffee-Milchgetränke angeboten. Durch die Zugabe der Aromen wird ein ganz individuelles Geschmackserlebnis bei den Milch-Mischgetränken erreicht. Zur Herstellung dieser Mischgetränke wird herkömmlich zunächst das Kaffee-Milchmischgetränk zubereitet und dem Getränk anschliessend ein Aromastoff in Form von Sirup beigegeben. Dieser wird von Hand mittels einer auf einem Sirupbehälter angebrachten Pumpe aus dem Behälter gepumpt und dem Getränk beigemischt. Diese Tätigkeit ist für das Bedienungspersonal zeitraubend und in Selbstbedienungsrestaurants nicht machbar. Ausserdem ist der Aromastoff-Sirup bei der Zugabe von Hand nicht immer gleich dosiert und mit der Milch bzw. dem Kaffee-Milchgetränk nicht optimal vermischt.

WO 2006/135864 offenbart eine Vorrichtung zur Herstellung verschiedener Getränke, die aus Milch und verschiedenen Aromastoffen gemischt sind. Die Vorrichtung ermöglicht nur die Herstellung heisser Getränke.

US 2005/095341 offenbart eine Vorrichtung nach dem Oberbegriff des Patentanspruchs 1 zur Herstellung verschiedener Getränke durch Verdünnung verschiedener Konzentrate mit Wasser. Die Vorrichtung dient zur Herstellung von Getränken mit mehrschichtigem Aussehen, nicht zur Herstellung von Getränken, die aus Milch und Aromastoffen gemischt sind.

Der vorliegenden Erfindung liegt die Aufgabe zugrunde, diese Nachteile zu beseitigen. Diese Aufgabe wird durch die kennzeichnenden Merkmale des Anspruchs 1 gelöst.

Der Erfindung liegt die Idee zugrunde, die Zugabe von Aromastoffen zu Milch und deren Durchmischung zur Zubereitung von Milch-Mischgetränken und/oder Kaffee-Milchmischgetränken verschiedener Geschmacksrichtungen zu automatisie-ren, wobei die Dosierung des Aromastoffes und die Abgabemenge der Milch über eine Steuerung vorwählbar sind. Die Vorrichtung ist als Teil einer Getränkezubereitung wie beispielsweise einer Kaffeemaschine gedacht und ist im Bereich der Milchzuführung der Getränkezubereitungsmaschine angeordnet. Aus einem Milchbehälter, der in einem gekühlten Bereich untergebracht ist, wird eine vorbestimmte Menge Milch über eine Zuführleitung in eine Mischkammer gepumpt. Die Vorrichtung enthält einen oder mehrere Aromastoff-Behälter mit unterschiedlichen Aromen. Von jedem Behälter führt eine Leitung über je eine Dosiervorrichtung beispielsweise eine Dosierpumpe zur Mischkammer. Die von der Steuerung angewählte Dosiervorrichtung fördert die vorbestimmte Menge Aromastoff in die Mischkammer, wo sich dieser mit der Milch durchmischt und als Milch-Sirup-Gemisch über eine Abgabeleitung einem Milchschäumer und/oder der Kaffeemaschine zugeführt und dort als Milchmischgetränk oder als Kaffee-Milchmischgetränk ausgegeben wird. Zur Vermeidung von Restsirup bzw. restlicher Milch-Sirupmischung in der Mischkammer und in der Abgabeleitung ist die Sirupzufuhr so bemessen, dass die zur Reinigung erforderliche Menge an Milch nach dem Mischvorgang zum Getränk hinzugemischt wird, so dass sich insgesamt das richtige Mischverhältnis einstellt.

Gemäss einer weiteren Ausbildung der Erfindung kann eine Abzweigleitung, die in die Milchzuleitung mündet, mit einer Dampf- oder Wasserzuleitung verbunden sein. Mit dieser kann ein Spülvorgang entweder manuell oder vollkommen automatisiert vorgenommen werden.

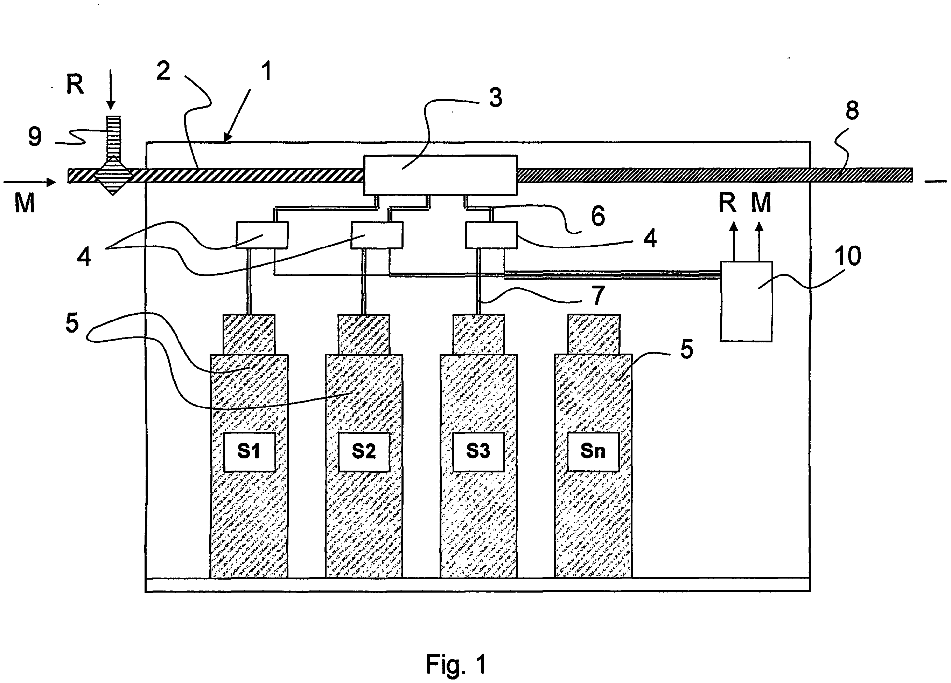

Nachfolgend wird die Erfindung anhand des in der beigeschlossenen Zeichnung dargestellten Ausführungsbeispieles erläutert. Es zeigt dabei Fig. 1 eine schematische Darstellung der erfindungsgemässen Vorrichtung.

In Fig. 1 ist die erfindungsgemässe Vorrichtung 1 zur Herstellung und Ausgabe verschiedener Getränke, die aus Milch und verschiedenen flüssigen Aromastoffen gemischt sind, schematisch dargestellt. Unter den Aromastoffen sind hauptsächlich sirupartige, konzentrierte Flüssigkeiten unterschiedlicher Geschmacksrichtung wie beispielsweise Vanille-, Schokolade-, Nuss- oder Amarettogeschmack zu verstehen. Die Vorrichtung weist eine Mischkammer 3 mit einer Müchzuleitung 2 und einer Leitung 8 zur Abgabe des Milch-Aromastoff-Gemisches auf. Die Vorratsbehälter 5 der verschiedenen flüssigen Aromastoffe S1..Sn sind in unmittelbarer Nähe der Mischkammer 3 in der Vorrichtung 1 angeordnet. Von jedem Vorratsbehälter 5 führt eine Saugleitung 7 zu einer Dosiervorrichtung bzw. Förderpumpe 4. Die Förderpumpe 4 ist über eine Zuleitung 6 mit der Mischkammer 3 verbunden. Die Aromastoff-Zuleitung 6 mündet vertikal von unten in die Mischkammer 3. Dadurch wird erreicht, dass nur die von der Förderpumpe 4 geförderte Menge an Sirup in die Mischkammer 3 eingebracht wird, und ein Nachlaufen aus der Zuleitung 6 in die Mischkammer verunmöglicht. Da die Sirupe eine höhere Dichte aufweisen als Milch, dringt auch keine Milch in die Zuleitungen 6 ein. Je nach Anzahl von Anschlussmöglichkeiten für Sirupzuleitungen 6 an der Mischkammer 3 können ein oder mehrere Vorratsbehälter 5 über jeweils zugehörige Saugleitungen 7 und Förderpumpen 4 an die Mischkammer angeschlossen werden. Die Anzahl der anschliessbaren Vorratsbehälter 5 hängt nur von der Grösse der Vorrichtung 1 und der Anzahl Anschlüsse an der Mischkammer 3 ab. Jede der Vorratsbehälter 5 beinhaltet einen anderen Aromastoff S1..Snn. Je mehr Vorratsbehälter 5 an der Mischkammer 3 angeschlossen sind, um so mehr Getränkevariationen können damit hergestellt werden. Die Förderpumpen 4 dienen als Dosierpumpe, die je nach Laufzeit mehr oder weniger Sirup in die Mischkammer 3 fördern. Als Förderpumpe 4 zur dosierten Förderung der Sirupe eignen sich besonders gut Schlauchquetschpumpen. Auch Einspritzvorrichtungen zur Zudosierung der Aromastoffe sind denkbar und insbesondere geeignet für hochkonzentrierte Aromazugaben. In der Mischkammer 3 sind Mittel zur Verwirbelung und Durchmischung der Milch mit dem über die Zuleitung 6 eingebrachten Aromastoff angeordnet. Diese Mittel können beispielsweise Lochbleche oder speziell angeordnete Strömungskanäle sein, welche ein direktes Durchströmen der unter Druck in die Mischkammer 3 eingebrachten Milch durch die Mischkammer 3 verunmöglichen. Durch die Verwirbelung der Milch in der Mischkammer 3 wird erreicht, dass sich der in die Mischkammer 3 eingebrachte Aromastoff gut mit der Milch vermischt und als Milch-Sirup-Gemisch über die Ausgabeleitung 8 einem Milchschäumer und/oder der Kaffeemaschine zugeführt und dort als Milchmischgetränk oder als Kaffee-Milchmischgetränk ausgegeben wird. Die Vorrichtung beinhaltet weiter eine Steuerung 10, die den zeitlichen Ablauf und die Dauer der Milchzuführung M regelt. Zu diesem Zweck wird entweder eine Förderpumpe zur Förderung der Milch aus dem gekühlten Bereich und/oder ein Ventil in der Milchzuleitung 2 angesteuert. Ebenso wird mit dieser Steuerung die zeitliche Dauer der Förderung der Aromastoffe S1..Sn mittels der Förderpumpen 4 geregelt. Zur Vermeidung von Restsirup bzw. restlicher Milch-Sirupmischung in der Mischkammer 3 und in der Abgabeleitung 8 ist die Sirupzufuhr zeitlich so bemessen, dass die zur Reinigung erforderliche Menge an Milch nach dem Mischvorgang zum Getränk hinzugemischt wird, so dass sich nach Abgabe der gesamten Milchmenge insgesamt das richtige Mischverhältnis einstellt.

In einer weiteren Ausbildung der Erfindung ist eine Abzweigleitung 9 vorgesehen, die in die Milchzuleitung 2 mündet. Die Abzweigleitung 9 ist mit einer über die Steuerung 10 regelbaren Dampf- oder Wasserzuleitung R verbunden. Mit dieser Dampf- oder Wasserzuleitung kann ein Spülvorgang R der Milchzuleitung 2, der Mischkammer 3 und der Abgabeleitung 8 entweder manuell oder vollkommen automatisiert vorgenommen werden. Manuell bedeutet, dass durch die Betätigung eines Auslöseknopfes der Reinigungsvorgang gestartet wird. Hingegen ist unter einem automatisierten Reinigungsvorgang ein Starten der Spülung in regelmässigen Zeitabständen oder nach einer bestimmten Anzahl von Getränkeportionen zu verstehen.

Der automatisierte Ablauf zur Zubereitung eines Milchmischgetränkes mit der erfindungsgemässen Vorrichtung erfolgt beispielsweise durch Betätigen einer Aromawahltaste. Dadurch wird die Dosiervorrichtung bzw. Förderpumpe 4, die das gewählte Aroma S aus dem Vorratsbehälter 5 in die Mischkammer 3 pumpt, in Betrieb genommen. Gleichzeitig wird die Milchzufuhr M durch Einschalten der Milchpumpe im Kühlbehälter und Öffnen des Milchzufuhrventils gestartet. Sobald die vorprogrammierte Zeit zur Förderung des Sirups abgelaufen ist, stoppt die Förderpumpe 4 und unterbindet weitere Sirupzufuhr in die Mischkammer. Die in die Mischkammer unter Druck einströmende Milch wird mit dem Sirup durchmischt und gelangt uber die Abgabeleitung 8 in die Getränkezubereitungsmaschine und kann dort als Kaltgetränk, oder über einen Milchschäumer als warmes Milchmischgetränk ausgegeben oder einem Kaffee zur Zubereitung eines Kaffee-Milchmischgetränks zugegeben werden. Da die Aromastoff-Zuführung früher beendet ist als die Milchzufuhr, wird die Mischkammer 3 mit der nachströmenden Milch gereinigt, so dass in der Mischkammer 3 und in der Abgabeleitung 8 nach Abschluss des Entnahmevorgangs keine Restmengen vom Milch-Sirup-Gemisch vorhanden sind. Bei einer nachfolgenden Entnahme mit einem anderen Aroma ist dadurch sicher gestellt, dass es zu keinen ungewollten Aroma-Milch-Mischungen kommt.

Es ist auch denkbar, dass der Milch bei einem Zyklus nicht nur ein Aromastoff beigemischt wird, sondern dass auch wahlweise mehrere Aromastoffe S1, S2 gleichzeitig der Milch zugegeben werden. Das wird mittels der Steuerung 10, welche die entsprechenden Dosierpumpen steuert, erreicht.

## Patentansprüche

1. Vorrichtung zur Herstellung und Ausgabe verschiedener Getränke, die aus einer ersten Flüssigkeit und verschiedenen zweiten Flüssigkeiten gemischt sind, beinhaltend eine Mischkammer (3) mit einer Zuleitung (2) für die erste Flüssigkeit und einer Leitung (8) zur Abgabe des Gemisches und wenigstens einen Vorratsbehälter (5) zur Aufnahme der zweiten Flüssigkeit (S1,S2,S3,Sn), wobei jeder Vorratsbehälter (5) mit einer Zuführleitung (7) über eine Dosiervorrichtung (4) bzw. eine Förderpumpe und einer Zuleitung (6) mit der Mischkammer (3) für jede zweite Flüssigkeit (S1,S2,S3,Sn) verbunden ist, so dass die mit der Förderpumpe (4) dosierbar in die Mischkammer (3) direkt beförderbare zweite Flüssigkeit (S1..Sn) in dieser mit der ersten Flüssigkeit vermischbar ist, wie sie aus dem Vorratsbehälter (5) entnommen wird, wobei das gemischte Getränk über die Ausgabeleitung (8) ausgebbar ist, **dadurch gekennzeichnet, dass** die erste Flüssigkeit Milch ist und die zweiten Flüssigkeiten Aromastoffe sind, und dass die Aromastoff-Zuleitungen (6) vertikal von unten in die Mischkammer (3) münden.

2. Vorrichtung nach Anspruch 1, **dadurch gekennzeichnet, dass** die Mischkammer (3) im Inneren Mittel zur Verwirbelung und Durchmischung der Milch mit dem Aromastoff aufweist.

3. Vorrichtung nach Anspruch 2, **dadurch gekennzeichnet, dass** zur Verwirbelung und Durchmischung der Milch mit dem Aromastoff Lochbleche in der Mischkammer (3) angeordnet sind.

4. Vorrichtung nach einem der vorhergehenden Ansprüche, **dadurch gekennzeichnet, dass** mehrere Aromastoffe (S1...Sn) gleichzeitig der Milch zugegeben werden.

5. Vorrichtung nach einem der vorhergehenden Ansprüche, **dadurch gekennzeichnet, dass** eine zur Reinigung der Mischkammer (3) und der Abgabeleitung (8) erforderliche Menge an Milch nach dem Mischvorgang zum Getränk hinzugemischt wird, so dass sich nach Abgabe der gesamten Milchmenge insgesamt das richtige Mischverhältnis einstellt.

6. Vorrichtung nach einem der vorhergehenden Ansprüche, **dadurch gekennzeichnet, dass** eine Abzweigleitung (9) mit der Milchzuleitung (2) verbunden ist, und dass durch die Abzweigleitung (9) Dampf oder Wasser zur Reinigung der Milchleitung (2), der Mischkammer (3) und der Ausgabeleitung (8) in die Milchleitung (2) einbringbar sind, und dass die zeitliche Dauer des Einbringens von Wasser oder Dampf in die Milchleitung (2) sowie deren zeitliche Abfolge zwischen der Milchzufuhr und der Reinigung mittels eine Steuerung (10) steuerbar sind.

## Claims

1. Device for producing and dispensing various beverages, which are mixed from a first liquid and various second liquids, containing a mixing chamber (3) with a feed line (2) for the first liquid and a line (8) for dispensing the mixture and at least one reservoir (5) for receiving the second liquid (S1, S2, S3, Sn), wherein each reservoir (5) is connected by a supply line (7) via a metering device (4) or a delivery pump and by a feed line (6) to the mixing chamber (3) for each second liquid (S1, S2, S3, Sn) so that the second liquid (S1...Sn), which can be directly conveyed by the delivery pump (4) into the mixing chamber (3) in a meterable manner, can be mixed therein with the first liquid as it is removed from the reservoir (5), wherein the mixed beverage can be dispensed via the dispensing line (8), **characterised in that** the first liquid is milk and the second liquids are flavouring agents, and **in that** the flavouring agent feed lines (6) open vertically from below into the mixing chamber (3).

2. Device according to claim 1, **characterised in that** the mixing chamber (3), in the interior, has means for swirling and thoroughly mixing the milk with the flavouring agent.

3. Device according to claim 2, **characterised in that** perforated plates are arranged in the mixing chamber (3) to swirl and thoroughly mix the milk with the flavouring agent.

4. Device according to any one of the preceding claims, **characterised in that** a plurality of flavouring agents (S1...Sn) are simultaneously added to the milk.

5. Device according to any one of the preceding claims, **characterised in that** a quantity of milk required to clean the mixing chamber (3) and the dispensing line (8) is mixed into the beverage after the mixing process so that after dispensing the total milk quantity, the correct mixing ratio is adjusted overall.

6. Device according to any one of the preceding claims, **characterised in that** a branch line (9) is connected to the milk feed line (2), and **in that** steam or water can be introduced into the milk line (2) through the branch line (9) to clean the milk line (2), the mixing chamber (3) and the dispensing line (8), and **in that** the time period for the introduction of water or steam into the milk line (2) and the time sequence thereof between the milk supply and the cleaning can be controlled by a controller (10).

## Revendications

1. Dispositif de production et de distribution de différentes boissons qui sont obtenues par mélange d'un premier liquide et de différents seconds liquides, ledit dispositif comprenant une chambre de mélange (3) dotée d'une conduite d'amenée (2) destinée au premier liquide et d'une conduite (8) destinée à la distribution du mélange et au moins un réservoir (5) destiné à recevoir le deuxième liquide (S1, S2, S3, Sn), chaque réservoir (5) étant relié pour chaque deuxième liquide (S1, S2, S3, Sn) à la chambre de mélange (3) par une conduite d'amenée (7) par le biais d'un dispositif de dosage (4) ou d'une pompe d'acheminement et par une conduite d'amenée (6) de sorte que le deuxième liquide (S1...Sn) pouvant être acheminé directement dans la chambre de mélange (3) de façon dosée avec la pompe d'acheminement (4) peut être mélangé dans cette chambre de mélange au premier liquide dès qu'il est prélevé dans le réservoir (5), la boisson mélangée pouvant être distribuée par la conduite de distribution (8), **caractérisé en ce que** le premier liquide est du lait et les deuxièmes liquides sont des substances aromatiques, et **en ce que** les conduites d'amenée de substances aromatiques (6) débouchent verticalement depuis le bas dans la chambre de mélange (3).

2. Dispositif selon la revendication 1, **caractérisé en ce que** la chambre de mélange (3) comporte à l'intérieur des moyens pour faire tourbillonner le lait et le mélanger à la substance aromatique.

3. Dispositif selon la revendication 2, **caractérisé en ce que** des tôles perforées sont disposées dans la chambre de mélange (3) pour faire tourbillonner le lait et le mélanger à la substance aromatique.

4. Dispositif selon l'une des revendications précédentes, **caractérisé en ce que** plusieurs substances aromatiques (S1, Sn) sont ajoutées en même temps au lait.

5. Dispositif selon l'une des revendications précédentes, **caractérisé en ce qu'**une quantité de lait suffisante pour nettoyer la chambre de mélange (3) et la conduite de distribution (8) est ajoutée et mélangée à la boisson après le processus de mélange afin de régler au total le bon rapport de mélange après la délivrance de toute la quantité de lait.

6. Dispositif selon l'une des revendications précédentes, **caractérisé en ce qu'**une conduite de dérivation (9) est reliée à la conduite d'amenée de lait (2), et **en ce que** de la vapeur ou de l'eau peut être introduite par la conduite de dérivation (9) dans la conduite de lait (2) pour nettoyer la conduite de lait (2), la chambre de mélange (3) et la conduite de distribution (8), et **en ce que** la durée d'introduction de l'eau ou de la vapeur dans la conduite de lait (2) ainsi que sa séquence chronologique entre l'amenée de lait et le nettoyage peuvent être commandées par une commande (10).
